Europäisches Patentamt

(19) European Patent Office

Office européen des brevets

(11) Numéro de publication : **0 177 984**
**B1**

(12) **FASCICULE DE BREVET EUROPÉEN**

(45) Date de publication du fascicule du brevet :
**11.01.89**

(21) Numéro de dépôt : **85201259.0**

(22) Date de dépôt : **01.08.85**

(51) Int. Cl.⁴ : **A 01 B 73/06**

(54) **Support d'outils qui, fixé au système de levage d'un tracteur agricole, déplie et referme en un mouvement les machines hydrauliquement et dans le plant horizontal.**

(30) Priorité : **10.08.84 BE 213483**
**14.12.84 BE 214167**

(43) Date de publication de la demande :
**16.04.86 Bulletin 86/16**

(45) Mention de la délivrance du brevet :
**11.01.89 Bulletin 89/02**

(84) Etats contractants désignés :
**AT BE CH DE FR GB IT LI LU NL SE**

(56) Documents cités :
**FR--A-- 2 538 670**
**GB--A-- 906 948**

(73) Titulaire : **Vanderroost, Frans**
**Zwaanstraat 5**
**B-1560 Galmaarden (BE)**

(72) Inventeur : **Vanderroost, Frans**
**Zwaanstraat 5**
**B-1560 Galmaarden (BE)**

(74) Mandataire : **Pieraerts, Jacques et al**
**Bureau Gevers S.A. rue de Livourne 7 bte 1**
**B-1050 Bruxelles (BE)**

EP 0 177 984 B1

Jouve, 18, rue St-Denis, 75001 Paris, France

## Description

Cette invention se rapporte à une installation permettant de disposer en deux positions par rapport à un tracteur, des machines agricoles telles que des épandeurs d'engrais, des semeuses, des machines à planter, des machines à travailler le sol et analogues, constituée de deux châssis 5 et 6 pivotant dans le plan horizontal, qui, d'un côté, sont reliés à charnière à une machine agricole et, de l'autre côté, peuvent être amenés à tourner autour d'un axe de pivotement vertical 4 qui est monté sur un châssis porteur 3 fixé au tracteur, les châssis 5 et 6 étant amenés à tourner autour de l'axe de pivotement vertical commun 4 à l'aide d'un cylindre hydraulique à double effet 13 dont la tige de piston 14 est déplacée dans un plan horizontal, selon un mouvement de va-et-vient.

Dans le brevet français 25 38 670 au nom de VEB KOMBINAT FORTSCHRITT LANDMACHINEN NEUSTADT IN SACHSEN est représentée une construction qui va dans le sens d'une solution. Les structures représentées présentent cependant l'inconvénient que, dans la position repliée des châssis sur lesquels sont montés des outils de travail, les deux châssis porteurs se trouvant côte à côte, ainsi que les poulies qui entraînent les courroies assurant la rotation occupent un espace qui est sensiblement égal à la largeur des outils ou machines agricoles elles-mêmes ; cette situation est inacceptable parce qu'on n'atteint pas la largeur autorisée sur la route à moins de réduire le volume, essentiellement la largeur des engins, trémies de semoir ou dépandage d'engrais et cela jusqu'à des dimensions inadmissibles ; un autre inconvénient doit être vu dans le fait que l'utilisation de câbles et de poulies n'assure pas toujours la synchronisation nécessaire entre les deux châssis lorsque ceux-ci sont déployés ou repliés. L'inconvénient principal demeure cependant le très grand volume en position refermée des moyens d'entraînement indispensables en vue de replier et d'ouvrir les châssis. On peut encore affirmer qu'en raison de la structure choisie, les liaisons à charnières entre les deux châssis fait apparaître une construction peu fiable et peu robuste, compte tenu des circonstances très difficiles dans lesquelles il doit être travaillé sur un terrain qui n'est pas souvent plane.

Quant au brevet GB 906 948 il ébauche une solution qui ne résout pas les problèmes pratiques qui concernent le déploiement des parties constitutives de la machine.

L'invention a pour but de fournir une solution originale aux problèmes cités grâce auxquels, à l'aide de moyens techniques fiables, deux machines agricoles présentant une largeur de travail d'environ plus ou moins trois mètres peuvent être transportées sous un volume réduit.

L'installation est conçue de telle sorte que le fait de faire pivoter et d'amener sous un volume réduit l'appareillage d'ensemencement ou d'épandage peut se faire sans devoir vider les silos considérés.

Pour obtenir ce résultat conformément à l'invention, l'axe de pivotement vertical est commun pour les deux châssis, chacun des châssis pivotants et portant les machines agricoles sont reliés par des leviers montés à charnière sur la tige de piston et les deux machines agricoles précitées sont reliées à charnière entre elles du côté qui, en position de travail, est dirigé vers le tracteur, toutes choses étant telles que lorsque la tige de piston est rentrée, les deux machines agricoles sont en ligne et parallèles au châssis de support précité, tandis que dans la position dite « de transport », les deux machines agricoles sont repliées côte à côte et les axes longitudinaux des deux machines agricoles s'étendent parallèlement à l'axe longitudinal de la tige de piston et du cylindre hydraulique précité.

Toujours selon l'invention, chacune des machines agricoles est montée avec un certain jeu par rapport à chacun des châssis pivotants, de telle sorte que chacune desdites machines agricoles s'adapte parfaitement aux inégalités du terrain considérées dans le sens transversal de l'installation.

D'autres détails et avantages de l'invention ressortiront de la description qui sera donnée ci-après l'installation permettant de disposer en deux positions par rapport à un tracteur, selon l'invention.

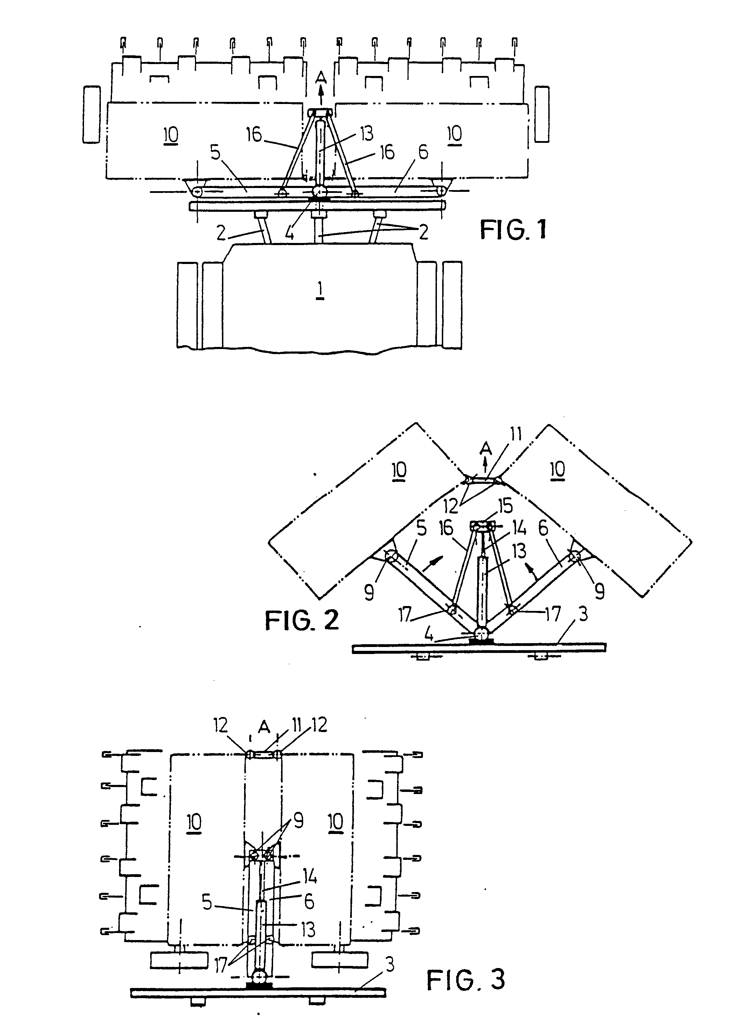

Les notations de référence se rapportent aux figures ci-annexées ; la figure 1 est une vue schématique en plan de l'installation selon l'invention en position de travail.

La figure 2 est une vue schématique en plan de l'installation dans une position intermédiaire entre la position de travail et la position de transport.

La figure 3 est une vue schématique en plan de l'installation dans la position de transport.

La figure 4 est une représentation schématique, à une échelle plus grande, d'une partie de l'installation selon l'invention.

Les figures 5 et 6 sont des vues de face de deux châssis pivotants coopérants entre eux, respectivement des châssis pivotants droit et gauche.

L'installation selon l'invention est imaginée et conçue pour être suspendue à un tracteur 1. La fixation au tracteur se fait selon le système d'attache en trois points.

Au tracteur 1 est en effet fixé à l'aide de trois leviers 2 de type connu en soi un châssis porteur 3.

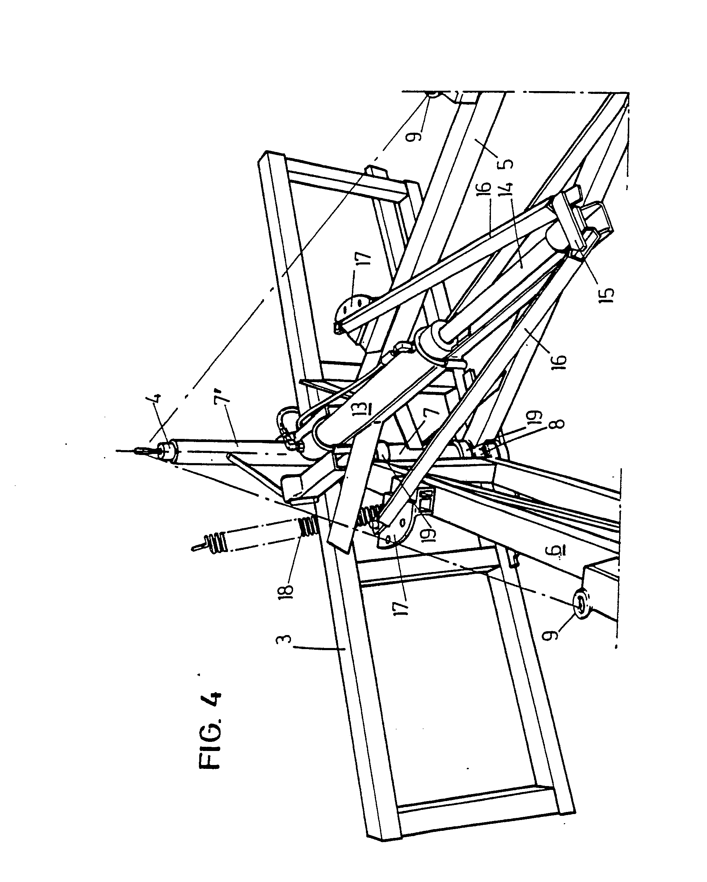

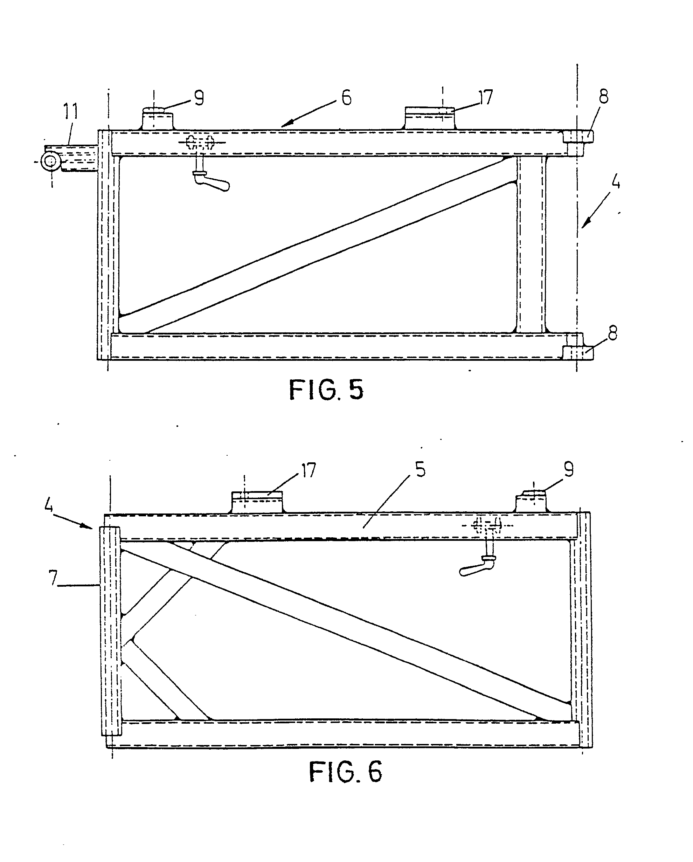

Sur ce châssis porteur 3 est monté un axe de pivotement vertical 4. Les deux châssis pivotants 5 et 6 sont montés pour tourner autour de cet axe de pivotement vertical 4. En se référant aux figures 4, 5 et 6, on remarque que sur le châssis pivotant 6 est incorporé un conduit 7 tandis que sur le châssis pivotant 5 figurent deux tourillons creux 8 qui constituent les éléments de charnière par rapport à l'axe 4. Au-dessus du châssis porteur 3 l'axe de pivotement se poursuit sous la forme d'un tuyau 7'.

Les châssis pivotants 5 et 6 pivotent donc d'une part autour de l'axe 4 qui est monté sur le châssis porteur 3 et d'autre part en 9 par rapport à chacune des machines agricoles 10. Les machines agricoles qui ont été représentées schématiquement sont reliées entre elles par des pièces de liaison à charnières 11 présentant des points de pivotement 12 par rapport aux machines agricoles 10.

Autour du conduit 7 sont prévus deux colliers de fixation 19 à l'aide desquels ce conduit est fixé sur le châssis porteur.

Pour amener ces machines agricoles de la position d'utilisation ou de travail selon la figure 1 à la position de transport selon la figure 3 il est fait appel à un cylindre hydraulique à double effet dont l'extrémité libre de la tige de piston 14 porte une liaison à charnières 15 destinée à deux bras de levier 16 qui sont reliés à rotation avec les châssis pivotants 5 et 6. Le cylindre hydraulique 13 s'étend dans un plan horizontal ou sensiblement horizontal.

A la position dans laquelle la tige de piston 14 est rentrée, les châssis pivotants 5 et 6 se trouvent dans le prolongement l'un de l'autre tel que représenté à la figure 1. Ceci correspond également à la position de travail de l'installation.

Lorsque la tige de piston 14 du cylindre hydraulique est complètement « extraite », tel que représenté à la figure 3, les deux châssis pivotants 5 et 6 se trouvent côte à côte et sont dans le prolongement l'un de l'autre. Grâce à cette conception, la totalité de la construction pivotante, les machines agricoles 10 se trouvent côte à côte et leurs axes longitudinaux sont parallèles entre eux. A cette position correspond la position de transport sur la voie publique de l'installation.

De la lecture des figures 1, 2 et 3, on remarque distinctement que lorsque la tige de piston 14 passe de la position « rentrée » selon la figure 1 vers la position « extraite », selon la figure 3, les machines agricoles et les châssis pivotants 5 et 6 se comportent comme un losange déformable et que toute l'opération de déploiement des machines agricoles 10 a lieu dans un plan horizontal. Ceci signifie que lorsque ces machines sont équipées de bacs qui contenaient soit des semences, soit des produits chimiques, ces bacs ou silos ne doivent pas être vidés.

Grâce à la conception originale de l'installation les deux machines agricoles 10 pivotent selon un mouvement au cours duquel les extrémités des machines agricoles dirigées l'une vers l'autre exécutent un mouvement de rotation vers l'arrière. L'expression « vers l'arrière » doit être comprise en considérant le sens dans lequel la machine agricole se déplace normalement sur le champ ou sur la voie publique.

Il est encore prévu des moyens qui soulagent la machine reposant sur le sol. A cet effet il est fait usage d'un ressort de traction 18 qui est tendu entre le tracteur et le châssis porteur 3. Ceci permet d'utiliser l'installation sur des terrains irréguliers.

Afin d'assurer au maximum la souplesse de l'ensemble chacune des machines agricoles 10 est montée avec suffisamment de jeu par rapport aux châssis pivotants 5 et 6. Ceci peut être exécuté grâce à une structure particulière de la liaison à charnières 9. Par une structure particulière de la liaison à charnières 9 on désigne un montage assurant un jeu important entre les machines agricoles 10 et chacun des châssis pivotants 5 et 6. Une solution simple et parfaitement fiable consiste à exécuter cette liaison à charnière en faisant usage d'un conduit ovale dans lequel s'adapte une tige cylindrique. Ces deux éléments qui réalisent la liaison à charnières entre chacun des châssis pivotants 5 et 6 et chacune des machines agricoles 10 assurent la liaison à charnière avec le jeu nécessaire ce qui permet à chacune des machines agricoles 10 de s'adapter parfaitement aux irrégularités du terrain considérées dans le sens transversal.

Il est évident que l'invention n'est pas limitée à la forme d'exécution décrite ci-dessus et que bien des modifications pourraient être apportées sans sortir du cadre de la présente demande de brevet.

## Revendications

1. Installation permettant de disposer en deux positions par rapport à un tracteur, des machines agricoles (10) telles que des épandeurs d'engrais, des semeuses, des machines à planter, des machines à travailler le sol et analogues, constituée de deux châssis (5 et 6) pivotant dans le plan horizontal, qui, d'un côté, sont reliés à charnière à une machine agricole (10) et, de l'autre côté, peuvent être amenés à tourner autour d'un axe de pivotement vertical (4) qui est monté sur un châssis porteur (3) fixé au tracteur, les châssis (5 et 6) étant amenés à tourner autour de l'axe de pivotement vertical (4) à l'aide d'un cylindre hydraulique à double effet (13) dont la tige de piston (14) est déplacée dans un plan horizontal, selon un mouvement de va-et-vient, caractérisée en ce que l'axe de pivotement vertical est commun pour les deux châssis, en ce que chacun des châssis pivotants (5 et 6) portant les machines agricoles (10) sont reliés par des leviers (16) montés à charnière sur la tige de piston (14) et en ce que les deux machines agricoles précitées sont reliées à charnière entre elles du côté qui, en position de travail, est dirigé vers le tracteur, toutes choses étant telles que lorsque la tige de piston (14) est rentrée, les deux machines agricoles (10) sont en ligne et parallèles au châssis de support précité (3), tandis que dans la position dite « de transport », les deux machines agricoles (10) sont repliées côte à côte et les axes longitudinaux des deux machines agricoles s'étendent parallèlement à l'axe longitudinal de la tige de piston (14) et du cylindre hydraulique précité (13).

2. Installation selon la revendication 1, caractérisée en ce que chacune des machines agricoles

(10) est montée avec un certain jeu par rapport à chacun des châssis pivotants (5 et 6), de telle sorte que chacune desdites machines agricoles (10) s'adapte parfaitement aux inégalités du terrain considérées dans le sens transversal de l'installation.

3. Installation selon la revendication 2, caractérisée en ce que le montage sous un certain jeu de chacune des machines agricoles (10), par rapport aux châssis pivotants précités (5 et 6) a lieu grâce à un montage dans lequel un conduit ovale fixé sur chacun des châssis coopère avec une tige cylindrique qui forme la liaison à charnière entre le châssis pivotant (5 ou 6) et la machine agricole (10) coopérant avec celui-ci.

## Claims

1. An installation enabling agricultural appliances (10), such as manure spreaders, drills, planters, soil-working appliances or the like, to be arranged in two positions relatively to a tractor, the installation comprising two frames (5, 6) which are pivotable in the horizontal plane, are hinged to an agricultural appliance (10) and can be made to turn around a vertical pivot shaft (4) disposed on a carrying frame (3) secured to the tractor, the frames (5, 6) being adapted to be rotated around the shaft (4) through the agency of a double-acting hydraulic cylinder (13) whose piston rod reciprocates in a horizontal plane, characterised in that the vertical pivot shaft is common to the two frames, each of the pivoted frames (5, 6) is connected by hinged levers (16) to the piston rod (14) and the two appliances are hingingly interconnected on the side which in the operative position is near the tractor, the whole being such that when the piston rod (14) retracts the two appliances (10) are in line and parallel to the support frame (3) whereas in the transportation position the two appliances (10) are folded side by side and the longitudinal axes of both appliances extend parallel to the longitudinal axis of the piston rod (14) and hydraulic cylinder (13).

2. An installation according to claim 1, characterised in that each appliance (10) is disposed with some cleareance relatively to each of the pivoted frames (5, 6) so that each machine (10) adapts satisfactorily to unevenesses of the ground as considered transversely of the installation.

3. An installation according to claim 2, characterised in that the assembly with some clearance of each appliance (10) relatively to the pivoted frames (5, 6) is the result of an assembly in which an oval duct secured to each of the frames cooperates with a cylindrical rod operative as the hinged connection between the pivoted frame (5 or 6) and the appliance (10) cooperating therewith.

## Patentansprüche

1. Anordnung, mit der landwirtschaftliche Maschinen (10) wie Düngerstreuer, Sä-, Pflanz- und Bodenbearbeitungsmaschinen und dergl. in zwei Stellungen bezüglich einem Traktors gebracht werden können und die zwei Rahmem (5 und 6) aufweist, die in der Horizontalen schwenkbar und einerseits scharnierartig mit einer landwirtschaftlichen Maschine (10) verbunden und andererseits um eine vertikale Schwenkachse (4) gedreht werden können, die auf einem am Traktor befestigten Traggestell (3) gelagert ist, wobei die Rahmen (5 und 6) mittels eines doppelt wirkenden Hydraulikzylinders (13) um die vertikale Schwenkachse gedreht werden können, dessen Kolbenstange (14) in einer Horizontalebene hin- und herbewegt wird, dadurch gekennzeichnet, daß die vertikale Schwenkachse beiden Rahmen gemeinsam ist, daß die die landwirtschaftlichen Maschinen (10) tragenden Schwenkrahmen (5 und 6) mit Hebeln (16) verbunden sind, die gelenkig an der Kolbenstange (14) festgelegt sind, und daß die beiden vorgenannten landwirtschaftlichen Maschinen auf ihrer in der Arbeitsstellung dem Traktor zugewandten Seite gelenkig miteinander sind, wobei bei eingefahrener Kolbenstange die beiden landwirtschaftlichen Maschinen (10) in einer Linie parallel zum vorgenannten Lagerrahmen (3) verlaufen, während sie in der sogenannten « Arbeitsstellung » aneinandergefaltet sind und ihre Längsachsen parallel zur Längsachse der Kolbenstange und des vorgenannten Hydraulikzylinders (13) verlaufen.

2. Anordnung nach Anspruch 1, dadurch gekennzeichnet, daß die landwirtschaftlichen Maschinen (10) jeweils mit einem gewissen Spiel bezüglich jedem der Schwenkrahmen (5 und 6) gelagert sind, so daß jede von ihnen sich Bodenunregelmäßigkeiten in Querrichtung der Anordnung vollkommen anpaßt.

3. Anordnung nach Anspruch 2, dadurch gekennzeichnet, daß die Lagerung mit Spiel jeder der landwirtschaftlichen Maschinen (10) bezüglich der genannten Schwenkrahmen (5 und 6) dank einer Lagerung erfolgt, bei der ein auf dem Rahmen befestigtes ovales Rohrstück mit einer zylindrischen Stange zumammenwirkt, die die Gelenkverbindung zwischen dem Schwenkrahmen (5 und 6) und der jewels zugehörigen landwirtschaftlichen Maschine (10) bildet.

FIG. 1

FIG. 2

FIG. 3

FIG. 4

EP 0 177 984 B1

**FIG. 5**

**FIG. 6**